# EUROPÄISCHE PATENTSCHRIFT

(11) **EP 3 490 126 B1**
(45) Veröffentlichungstag und Bekanntmachung des Hinweises auf die Patenterteilung: **16.02.2022**
(21) Anmeldenummer: 18200319.4
(22) Anmeldetag: 15.10.2018
(51) Int. Cl.: H02K 49/10

(54) **MAGNETKUPPLUNG FÜR ABWÄRMENUTZUNGSEINRICHTUNG**
MAGNETIC COUPLING FOR WASTE HEAT USE DEVICE
ACCOUPLEMENT MAGNÉTIQUE POUR DISPOSITIF UTILISANT DE LA CHALEUR

(30) Priorität: 23.11.2017 AT 4602017
(43) Veröffentlichungstag der Anmeldung: 29.05.2019
(73) Patentinhaber: MAN Truck & Bus SE, 80995 München (DE)
(72) Erfinder: Klammer, Josef, 4400 Steyr (AT); Stanzer, Stefan, 8171 St. Kathrein am Offenegg (AT)
(74) Vertreter: v. Bezold & Partner Patentanwälte - PartG mbB

(56) Entgegenhaltungen:
- DE-A1-102015 204 506
- DE-A1-102015 211 751
- DE-T5-112008 002 854
- US-A1- 2013 205 773

## Beschreibung

Die Erfindung betrifft eine Vorrichtung mit einer Abwärmenutzungseinrichtung aufweisend eine Magnetkupplung und eine Expansionsmaschine.

In Systemen zur Abwärmenutzung (Waste Heat Recovery = WHR) von Brennkraftmaschinen können unter anderem Dampfkreisläufe zur Anwendung kommen. Dabei kann ein Kreislaufmedium in einer Speisepumpe auf ein hohes Druckniveau gebracht und in einem Verdampfer verdampft und überhitzt werden. Dieser Dampf wird einer Expansionsmaschine zugeführt, die die im Dampf gespeicherte Enthalpie in nutzbare mechanische Arbeit/Leistung umwandelt. Nach der Expansionsmaschine wird der Dampf wieder verflüssigt und der Speisepumpe zugeführt. Zur Rückspeisung der rückgewonnenen Leistung bieten sich entweder eine mechanische Koppelung der Expansionsmaschine mit der Brennkraftmaschine an, oder die Expansionsmaschine wird an einen Generator montiert, der elektrische Energie erzeugt, die über einen Elektromotor wiederum der Brennkraftmaschine zugeführt wird. Hierin wird insbesondere die mechanische Kopplung einer Expansionsmaschine mit einer Brennkraftmaschine behandelt.

Bisher sind verschiedene Systeme zur Koppelung der Expansionsmaschine mit dem Verbrennungsmotor bekannt. Dazu gehören Systeme mit Kupplungen, Systeme mit Freiläufen und Systeme mit starrer Verbindung.

Bei Systemen mit Kupplung kann die Koppelung der Expansionsmaschine mit der Brennkraftmaschine mit Hilfe einer schaltbaren Kupplung erfolgen. Damit kann die Expansionsmaschine beliebig mit dem Verbrennungsmotor gekoppelt oder von ihm entkoppelt werden. Nachteilig jedoch ist die aufwändige Detektierung der Zu- und Abschaltzeitpunkte. Idealerweise soll die Expansionsmaschine entkoppelt werden, wenn sie geschleppt wird und eingekoppelt werden, wenn sie Leistung abgibt. Ohne aufwändige Drehmomentmessung muss der richtige Zu- und Abschaltzeitpunkt anhand anderer Kriterien (z. B. Temperaturen an bestimmten Stellen in der Maschine) ermittelt werden. Diese Ermittlung muss höchst zuverlässig sein, da Expansionsmaschinen beschädigt werden können, wenn sich z. B. noch flüssiges oder teilweise flüssiges Arbeitsmedium in ihnen befindet. Deshalb darf die Expansionsmaschine beim Start erst dann mit dem Verbrennungsmotor gekoppelt werden, wenn sichergestellt ist, dass sich keine Flüssigkeit mehr in ihr befindet. Beim Abstellvorgang muss die Maschine entkoppelt werden, bevor das dampfförmige Arbeitsmedium zu kondensieren beginnt, darf aber erst so spät entkoppelt werden, dass sie nicht nach Öffnen der Kupplung mit dem vorhandenen Restdampf lastlos hochdreht. Auch hier ist die Bestimmung des richtigen Abschaltzeitpunktes ohne aufwändige Drehmomentmessung schwierig. Zusätzlich stellt die aktive Kupplung ein Verschleißteil dar, das die Systemkosten des Abwärmenutzungssystems erhöht und auch funktionell überwacht werden muss.

Technischer einfacher beherrschbar und kostengünstiger sind Systeme mit Freiläufen. Die passiven Freilaufelemente, beispielsweise Klemmkörperfreiläufe, ermöglichen Drehmomentflüsse in nur eine Richtung. Bei der Anwendung als Element zur Koppelung einer Expansionsmaschine mit einem Verbrennungsmotor kann dadurch sichergestellt werden, dass die Leistung nur von der Expansionsmaschine zum Verbrennungsmotor übertragen werden kann, nicht umgekehrt. Somit wird die Expansionsmaschine beim Start nicht beschädigt, wenn sie sich aufgrund von vorhandenem flüssigen oder teilweise flüssigen Arbeitsmedium noch nicht drehen lässt. Beginnt die Expansionsmaschine Leistung abzugeben, dann dreht sie hoch und koppelt automatisch in den Verbrennungsmotor ein. Beim Abstellvorgang läuft die Expansionsmaschine lastlos aus, wenn sie nicht mehr ausreichend Leistung abgibt. Diese passive Koppelung benötigt keine aktive Ansteuerung. Ein Nachteil dieser Systeme ist, dass sie nur bei Expansionsmaschinen eingesetzt werden kann, die bei Dampfbeaufschlagung selbst anlaufen. Hinzu kommt die stark begrenzte Lebensdauer, speziell bei der Koppelung von Expansionsmaschinen mit Verbrennungsmotoren. In dieser Anwendung müssen hohe Leistungen der Expansionsmaschinen (zum Beispiel bis 15 kW) bei gleichzeitigen hohen Drehungleichförmigkeiten der Brennkraftmaschine (bedingt durch die Zündstöße) ein- und ausgekoppelt werden. Im ausgekoppelten Zustand treten auch hohe Relativgeschwindigkeiten im Freilauf auf, die zu Verschleiß und im Schadensfall zum Durchdrehen des Freilaufs führen. In diesem Fall dreht die Expansionsmaschine ohne Widerstand hoch, bis sie sich durch die Überdrehzahl selbst zerstört (Lagerschaden, Bauteilversagen durch Massenkräfte usw.). Eine Möglichkeit zur Abhilfe sind Schwingungsdämpfer, die zwar die häufigen Schaltwechsel aufgrund der Drehungleichförmigkeiten mindern, jedoch nicht die Verschleißerscheinungen aufgrund der Relativbewegungen im Freilauf. Weiterhin stellt der Schwingungsdämpfer einen zusätzlichen Kostenfaktor dar. Die einfachste, und kostengünstigste Lösung sind Systeme mit starrer Koppelung.

Systeme mit starrer Koppelung stellen die kostengünstigste Variante der bekannten Koppelungsmöglichkeiten von Expansionsmaschinen und Verbrennungsmotoren dar. Sie können allerdings nur eingesetzt werden, wenn die Expansionsmaschine so konzipiert ist, dass sie in jedem Zustand geschleppt werden kann und darf, auch im völlig mit flüssigem Arbeitsmedium gefüllten Zustand. Nachteilig ist, dass mit dieser Art der Koppelung die Expansionsmaschine in den Betriebszuständen, in denen sie keine Leistung abgibt, vom Verbrennungsmotor mitgeschleppt werden muss. Das verringert das Potential des Abwärmenutzungssystems aufgrund der zusätzlich erforderlichen Schleppleistung. Ein weiterer Nachteil ist, dass es bei der starren Anbindung kein Dämpfungselement zwischen Expansionsmaschine und Verbrennungsmotor gibt und somit sämtliche Drehungleichförmigkeiten direkt vom Verbrennungsmotor auf die Expansionsmaschine wirken. Abhilfe würde hier wieder ein Schwingungsdämpfer als zusätzliches Element schaffen.

Drehschwingungsdämpfer dienen zur Dämpfung von Drehschwingungen zwischen zwei Bauteilen. Speziell bei der Koppelung einer Expansionsmaschine mit einem Verbrennungsmotor kann ein Drehschwingungsdämpfer zum Bauteilschutz eingesetzt werden, wenn bspw. hohe erforderliche Lebensdauern erreicht werden müssen.

Eine spezielle Art von Drehschwingungsdämpfern sind Magnetkupplungen. Diese können einen ersten Rotor und einen zweiten Rotor aufweisen. Auf beiden können radial oder axial Permanentmagnete unterschiedlicher Polung angeordnet. Die Magnete dieser beiden Rotoren ziehen sich wechselseitig an und übertragen so ein Drehmoment, wobei sich die Magnete nicht berühren und die Magnetkupplung vollkommen verschleißfrei arbeitet. Je mehr Magnete am Umfang verbaut werden, desto steifer ist die Kupplung. Bei hohen Drehmomentspitzen (z. B. infolge von Drehungleichförmigkeiten) bewegen sich die Magnete des Innen- und Außenrings geringfügig relativ zueinander. Die Magnetkupplung kann damit als drehschwingungsdämpfendes Bauteil eingesetzt werden, wobei nach dem Stand der Technik ein Durchrutschen der Kupplung durch Endanschläge verhindert werden muss.

Der Einsatz von Magnetkupplungen zur Koppelung von Expansionsmaschinen und Brennkraftmaschinen ist bspw. aus der DE 10 2013 213 581 A1, DE 10 2014 210 299 A1 und der DE 10 2015 223 339 A1 bekannt.

Bspw. ist in der DE 10 2014 210 299 A1 eine schaltbare Magnetkupplung mit einem Stator, einem ersten Rotor und einem zweiten Rotor offenbart. Über eine aktive Verstellung des Stators kann eine Antriebsverbindung zwischen dem ersten Rotor und dem zweiten Rotor unterbrochen und damit die Magnetkupplung aktiv in einen Freilaufbetrieb geschaltet werden.

Die DE 10 2015 211 751 A1 offenbart eine Kupplungseinrichtung für eine Antriebsvorrichtung eines Fahrzeugs. Ein erstes Kupplungselement weist ein erstes Permanentmagnetelement auf, und ein zweites Kupplungselement weist ein zweites Permanentmagnetelement auf.

Die DE 11 2008 002 854 T5 offenbart eine Kraftübertragungsvorrichtung zum Übertragen einer Antriebskraft von einer auf einem Fahrzeug montierten Antriebsquelle an einen Kompressor, welcher in einem Kältekreislauf einer Klimaanlage für ein Fahrzeug enthalten ist. Ein magnetischer Verbindungsabschnitt ist zum Übertragen einer rotatorischen Antriebskraft von einem Antriebsrotor auf einen angetriebenen Rotor durch eine magnetische Kraft angepasst.

Die DE 10 2015 204 506 A1 offenbart eine Turbinenrad-Anordnung für eine Turbine einer Abwärmenutzungseinrichtung mit einem Turbinenrad und einer Magnetkupplung.

Die US 2013/205773 A1 offenbart ein Turboverbundgetriebe umfassend eine Turboverbundturbine, die von den Abgasen eines Verbrennungsmotors angetrieben werden soll, und eine Kupplung mit einem ersten Rotor, der einen mechanischen Eingangsantrieb aufweist, der von der Turbine angetrieben werden kann, und einem zweiten Rotor, der einen mechanischen Ausgangsantrieb aufweist. Eine Bremse ist angeordnet, um die Drehung der Turbine zu bremsen und zu begrenzen. Die Kupplung ist so angeordnet, dass sie sich beim Abbremsen mit der Bremse entkoppelt, wobei die Kupplung einem Drehmoment oberhalb einer vorgegebenen Drehmomentgrenze ausgesetzt wird. Die Kupplung ist vorzugsweise eine magnetische Kupplung.

Der Erfindung liegt die Aufgabe zu Grunde, eine alternative oder verbesserte Koppelung einer Expansionsmaschine mit einer Brennkraftmaschine vorzusehen. Vorzugsweise soll eine Koppelung vorgesehen werden, die zumindest einige der verschiedenen Vorteile der zuvor beschriebenen Systeme miteinander kombiniert.

Die Aufgabe wird gelöst durch eine Vorrichtung gemäß dem unabhängigen Anspruch. Vorteilhafte Weiterbildungen sind in den abhängigen Ansprüchen und der Beschreibung angegeben.

Die Vorrichtung weist eine Abwärmenutzungseinrichtung aufweisend eine Magnetkupplung und eine Expansionsmaschine, die trieblich mit der Magnetkupplung verbunden ist, auf. Die Magnetkupplung ist eine Radialmagnetkupplung oder eine Axialmagnetkupplung. Die Magnetkupplung weist einen ersten Rotor mit mehreren mit alternierender magnetischer Polarität angeordneten Magneten auf. Die Magnetkupplung weist einen zweiten Rotor mit mehreren mit alternierender magnetischer Polarität angeordneten Magneten auf, die den mehreren Magneten des ersten Rotors zum magnetischen Koppeln des zweiten Rotors mit dem ersten Rotor gegenüberliegen. Der erste Rotor und der zweite Rotor sind frei drehbar zueinander. Die mehreren Magnete des ersten Rotors und die mehreren Magnete des zweiten Rotors sind so ausgebildet, dass ein drehschwingungsdämpfender Drehmomentübertragungsbetrieb zwischen dem ersten Rotor und dem zweiten Rotor in einen Freilaufbetrieb zwischen dem ersten Rotor und dem zweiten Rotor übergeht, wenn ein zwischen dem ersten Rotor und dem zweiten Rotor zu übertragendes Drehmoment betragsmäßig größer als ein vorbestimmtes Grenzdrehmoment ist.

Die Magnetkupplung ermöglicht die Integration der Funktionen Drehschwingungsdämpfer, verschleißfreier Freilauf mit geringer Schleppleistung und Sicherheits-/Überlastkupplung in einem Bauteil. Dies ermöglicht eine kostengünstige, robuste und verschleißfreie Koppelungsmöglichkeit von Expansionsmaschinen mit Brennkraftmaschinen, ohne die Notwendigkeit von aufwendigen Detektierungen und Ansteuerungs- und Überwachungslogiken. Insbesondere kann die Magnetkupplung so ausgeführt werden, dass sie bei Überlast von dem Drehmomentübertragungsbetrieb zu dem Freilaufbetrieb übergeht, sodass keine oder keine weiteren Bauteilbeschädigungen auftreten.

Insbesondere können die mehreren Magnete des ersten Rotors in einer Umfangsrichtung um eine Drehachse des ersten Rotors angeordnet sein, die mehreren Magnete des zweiten Rotors in einer Umfangsrichtung um eine Drehachse des zweiten Rotors angeordnet sein und/oder der erste Rotor und der zweite Rotor koaxial angeordnet sein.

In einem bevorzugten Ausführungsbeispiel drehen sich beim Freilaufbetrieb der erste Rotor und der zweite Rotor relativ zueinander mit einem Schleppmoment. Der erste Rotor der zweite Rotor können dabei vollständige Relativdrehungen zueinander ausführen. Das Schleppmoment ermöglicht, dass die Brennkraftmaschine die Expansionsmaschinen zu Beginn des Hochfahrens mitschleppen kann. Dies kann insbesondere bei nichtselbstanfahrenden Expansionsmaschinen hilfreich sein.

In einem weiteren bevorzugten Ausführungsbeispiel wird beim drehschwingungsdämpfenden Drehmomentübertragungsbetrieb ein an dem ersten Rotor anliegendes Drehmoment im Wesentlich vollständig an den zweiten Rotor übertragen und umgekehrt. Hierbei finden keine vollständigen Relativdrehungen der Rotoren zueinander statt, sondern nur Verdrehungen im kleinen Verdrehwinkelbereich zur Drehschwingungsdämpfung. Insbesondere bewegen sich die Rotoren zum Dämpfen von Drehschwingungen relativ zueinander in einem Verdrehwinkelbereich, der von einer Anzahl und Dimensionierung der mehreren Magnete der Rotoren abhängt. Der Verdrehwinkelbereich kann beispielsweise einer Breite eines Magneten (gemessen in einer Umfangsrichtung um eine Drehachse des jeweiligen Rotors) entsprechen. Damit kann die Magnetkupplung Drehungleichförmigkeiten aufgrund von Zündstößen der Brennkraftmaschine kompensieren.

In einem Ausführungsbeispiel sind der erste Rotor und der zweite Rotor zum Zeitpunkt des Überschreitens des Grenzdrehmoments (insbesondere beim Übergang vom drehschwingungsdämpfenden Drehmomentübertragungsbetrieb zum Freilaufbetrieb) so zueinander verdreht sind, dass sich jeweils Magnete des ersten Rotors und des zweiten Rotors mit gleicher magnetischer Polarität direkt gegenüberliegen.

In einem weiteren Ausführungsbeispiel geht der Freilaufbetrieb in den drehschwingungsdämpfenden Drehmomentübertragungsbetrieb über, wenn ein zwischen dem ersten Rotor und dem zweiten Rotor zu übertragendes Drehmoment betragsmäßig kleiner als das Grenzdrehmoment ist und sich der erste Rotor und der zweite Rotor synchron (mit gleicher Drehzahl) drehen. Damit kann nach dem Hochfahren der Expansionsmaschine bei Synchrondrehzahl eine Kopplung zwischen den Magneten des ersten Rotors und des zweiten Rotors ermöglicht werden, sodass die Expansionsmaschine Leistung an die Brennkraftmaschine übertragen kann. Insbesondere kann eine Drehzahl des drehfest mit der Expansionsmaschine verbundenen Rotors gezielt über eine Steuerung der Expansionsmaschine (zum Beispiel Öffnen und/oder Schließen eines Bypassventils) beeinflusst werden, sodass eine Synchronisierung der Drehzahlen des ersten Rotors und des zweiten Rotors zum Einkoppeln der mehreren Magnete des ersten Rotors und des zweiten Rotors stattfinden kann.

In einem besonders bevorzugten Ausführungsbeispiel ist das Grenzdrehmoment passiv über eine Dimensionierung, eine Anzahl, einen Werkstoff und/oder eine Anordnung der mehreren Magnete des ersten Rotors und der mehreren Magnete des zweiten Rotors vorgegeben. Die hierin offenbarte passive Ausführung der Magnetkupplung ist gegenüber dem bekannten aktiven Verstellmechanismus (vgl. DE 10 2014 210 299 A1) vorteilhaft in Bezug auf Kosten und Robustheit der Magnetkupplung.

Insbesondere kann die Magnetkupplung nicht-schaltbar ausgeführt sein. Da der Freilaufbetrieb passiv erreichbar ist, kann eine Schaltbarkeit der Magnetkupplung zum Schalten in den Freilaufbetrieb vorliegend nicht notwendig sein.

In einer Ausführungsform weist die Magnetkupplung ferner eine Kühlvorrichtung auf, die zum Kühlen des ersten Rotors und/oder des zweiten Rotors ausgebildet ist. Damit kann insbesondere die im Freilaufbetrieb entstehende Wärme zum Schutz der Magnetkupplung abgeführt werden.

Beispielsweise kann die Kühlvorrichtung ein Schmiermittel, zum Beispiel Öl, oder ein Kühlmittel zu der Magnetkupplung zuführen.

In einer weiteren Ausführungsform weist die Magnetkupplung keine Mittel, insbesondere Anschläge, zum Begrenzen eines relativen Verdrehwinkels zwischen dem ersten Rotor und dem zweiten Rotor auf. Damit kann sichergestellt werden, dass der erste Rotor und der zweite Rotor frei drehbar zueinander sind, sodass der Freilaufbetrieb erreichbar ist.

Erfindungsgemäß ist die Magnetkupplung eine Radialmagnetkupplung. Hierbei kann einer von dem ersten Rotor und dem zweiten Rotor als Innenrotor und der andere von dem ersten Rotor und dem zweiten Rotor als Außenrotor ausgebildet sein. Alternativ ist die Magnetkupplung als eine Axialmagnetkupplung ausgebildet. Hierbei können der erste Rotor und der zweite Rotor axial gegenüberliegend angeordnet sein. Damit kann die hierin offenbarte Magnetkupplung in den gängigen Konfigurationen ausgeführt sein.

Die vorliegende Offenbarung betrifft auch eine Abwärmenutzungseinrichtung zur Koppelung mit einer Brennkraftmaschine. Die Abwärmenutzungseinrichtung weist eine Magnetkupplung wie hierin offenbart und eine Expansionsmaschine, die trieblich mit der Magnetkupplung verbunden ist, auf.

Erfindungsgemäß liegt das Grenzdrehmoment in einem Bereich größer als ein Betrag eines maximalen dynamischen Betriebsmoments der Expansionsmaschine und kleiner oder gleich einem Betrag eines zulässigen Überlastmoments der Expansionsmaschine. Alternativ entspricht das Grenzdrehmoment betragsmäßig einem zulässigen Überlastmoment der Expansionsmaschine.

Insbesondere kann in der Expansionsmaschine ein verdampftes und überhitztes Arbeitsmedium der Abwärmenutzungseinrichtung, zum Beispiel überhitzter Wasser-, Alkohol- oder Kältemitteldampf, entspannt werden, wobei die Enthalpie des Arbeitsmediums in nutzbare mechanische Arbeit/Leistung umgewandelt wird.

Zusätzlich kann die Abwärmenutzungseinrichtung eine Speisepumpe, einen Verdampfer und/oder einen Verflüssiger aufweisen. Die Speisepumpe kann ein Arbeitsmedium der Abwärmenutzungseinrichtung auf ein höheres Druckniveau heben. Der Verdampfer kann das Arbeitsmedium verdampfen und überhitzen. Der Verflüssiger kann das Arbeitsmedium verflüssigen.

Insbesondere kann der Verdampfer stromabwärts von der Speisepumpe angeordnet sein, die Expansionsmaschine kann stromabwärts des Verdampfers angeordnet sein, der Verflüssiger kann stromabwärts der Expansionsmaschine angeordnet sein und/oder die Speisepumpe kann stromabwärts des Verflüssigers angeordnet sein.

Vorzugsweise kann der Verdampfer mit einem Abgassystem der Brennkraftmaschine verbunden sein, sodass Wärmeenergie des durch das Abgassystem strömenden Abgases zum Verdampfen des Arbeitsmediums der Abwärmenutzungseinrichtung genutzt wird.

Erfindungsgemäß weist die Vorrichtung ferner eine Brennkraftmaschine auf, die über die Magnetkupplung trieblich mit der Expansionsmaschine der Abwärmenutzungseinrichtung verbunden ist.

In einem möglichen Betriebszustand der Magnetkupplung kann beim Starten der Brennkraftmaschine die Expansionsmaschine über die Magnetkupplung im drehschwingungsdämpfenden Drehmomentübertragungsbetrieb mitgeschleppt werden, wobei bei Überschreiten des Grenzdrehmoments die Magnetkupplung in den Freilaufbetrieb übergeht.

In einem erfindungsgemäßen Betriebszustand wird die Expansionsmaschine beim Hochfahren (der Expansionsmaschine) im Freilaufbetrieb mitgeschleppt. Damit kann insbesondere beim Kaltstart die Expansionsmaschine mitgeschleppt werden, was insbesondere bei nicht-selbstanlaufenden Expansionsmaschinen hilfreich sein kann.

Erfindungsgemäß wird beim Erreichen eines Normalbetriebsbereichs der Expansionsmaschine eine Synchrondrehzahl zwischen dem ersten Rotor und dem zweiten Rotor erreicht, bei der die Magnetkupplung vom Freilaufbetrieb in den drehschwingungsdämpfenden Drehmomentübertragungsbetrieb übergeht. Alternativ oder zusätzlich ist im Normalbetriebsbereich der Expansionsmaschine die Magnetkupplung im drehschwingungsdämpfenden Drehmomentübertragungsbetrieb.

In einem erfindungsgemäßen Betriebszustand geht im Überlastbetriebsbereich der Expansionsmaschine die Magnetkupplung aufgrund des Überschreitens des Grenzdrehmoments in den Freilaufbetrieb über.

Die vorliegende Offenbarung betrifft auch ein Kraftfahrzeug, insbesondere ein Nutzfahrzeug (zum Beispiel Lastkraftwagen oder Omnibus). Das Kraftfahrzeug weist eine Magnetkupplung wie hierin offenbart, eine Abwärmenutzungseinrichtung wie hierin offenbart oder eine Vorrichtung wie hierin offenbart auf.

Es ist auch möglich, die Magnetkupplung, die Abwärmenutzungseinrichtung und/oder die Vorrichtung wie hierin offenbart für Personenkraftwagen, Großmotoren, geländegängige Fahrzeuge, stationäre Motoren, Marinemotoren usw. zu verwenden.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine Prinzipskizze einer Vorrichtung mit Brennkraftmaschine und Abwärmenutzungseinrichtung;
- Figur 2: eine perspektivische Schemadarstellung eines ersten Ausführungsbeispiels einer Magnetkupplung;
- Figur 3: eine perspektivische Schemadarstellung eines zweiten Ausführungsbeispiels einer Magnetkupplung; und
- Figur 4: ein Diagramm mit einem Drehmomentverlauf der Magnet-kupplung aufgetragen über einen Verdrehwinkel zwischen einem ersten Rotor und einem zweiten Rotor der Magnet-kupplung.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

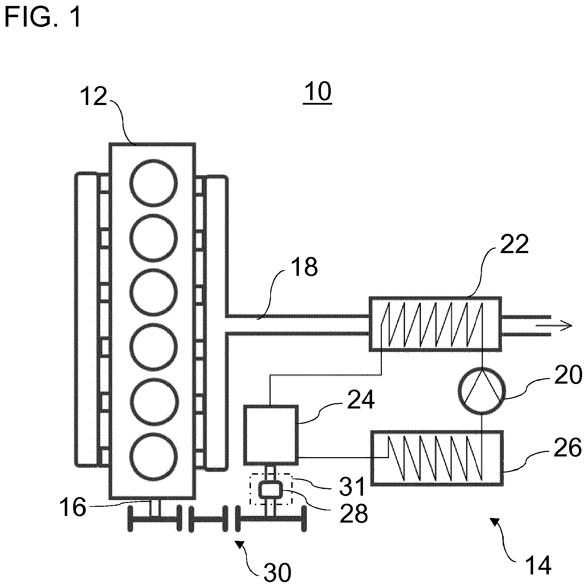

In Figur 1 ist eine Vorrichtung 10 gezeigt. Die Vorrichtung 10 weist eine Brennkraftmaschine 12 und eine Abwärmenutzungseinrichtung 14 auf.

Die Brennkraftmaschine 12 kann eine Kurbelwelle 16 und ein Abgassystem 18 aufweisen. Während des Betriebs wird das Abgassystem 18 von heißem Abgas durchströmt. Die Brennkraftmaschine 12 kann beispielsweise in einem Nutzfahrzeug, zum Beispiel einem Lastkraftwagen oder einem Omnibus, umfasst sein.

Die Abwärmenutzungseinrichtung 14 weist eine Speisepumpe 20, einen Verdampfer 22, eine Expansionsmaschine 24 und einen Verflüssiger 26 auf.

In der Abwärmenutzungseinrichtung 14 wird ein Kreislaufmedium, zum Beispiel Wasser, Alkohol oder Kältemittel, in der Speisepumpe 20 auf ein hohes Druckniveau gebracht. Das Kreislaufmedium wird in dem Verdampfer 22 verdampft und überhitzt. Die hierfür erforderliche Wärme wird einem durch das Abgassystem 18 strömenden Abgasstrom entzogen. Das dampfförmige und überhitzte Kreislaufmedium wird der Expansionsmaschine 24 zugeführt, in der es unter Verrichtung von Arbeit expandiert. Hierbei wird die im Dampf gespeicherte Enthalpie in nutzbare mechanische Arbeit/Leistung umgewandelt. Die Expansionsmaschine 24 kann beispielsweise als eine Verdrängermaschine (z.B. Axialkolbenmaschine, Scroll) oder als eine Strömungsmaschine (z.B. Dampfturbine) ausgebildet sein. Nach der Expansionsmaschine 24 wird der Dampf im Verflüssiger 26 verflüssigt und erneut der Speisepumpe 20 zugeführt.

Die Expansionsmaschine 24 ist trieblich mit der Brennkraftmaschine 12 verbunden, um die rückgewonnene mechanische Arbeit/Leistung zu der Brennkraftmaschine 12 zu übertragen. Im Einzelnen ist die Expansionsmaschine 24 über eine Magnetkupplung 28 und einen zweistufigen Rädertrieb 30 mit der Kurbelwelle 16 der Brennkraftmaschine 12 verbunden.

Zum Kühlen der Magnetkupplung 28 kann zusätzlich eine Kühlvorrichtung 31 vorgesehen sein, wie später näher beschrieben ist.

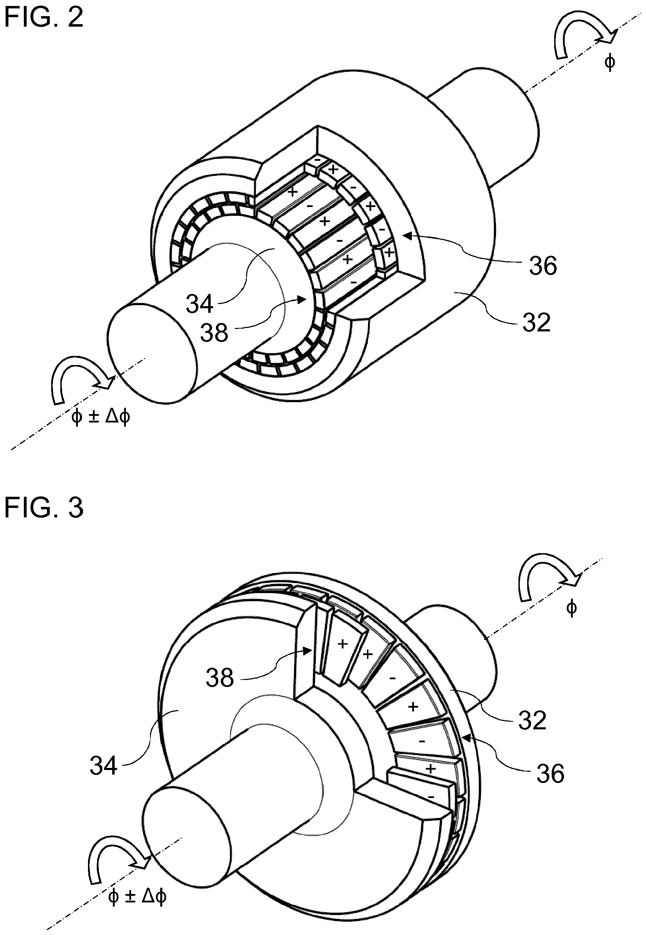

Die Magnetkupplung 28 ist wie in den Figuren 2 und 3 gezeigt ausgebildet. Die Magnetkupplung 28 von Fig. 2 ist als eine Radialmagnetkupplung ausgebildet, das heißt, die Magnete 36, 38 liegen sich in radialer Richtung gegenüber. Die Magnetkupplung 28 von Fig. 3 ist als Axialmagnetkupplung ausgebildet, das heißt, die Magnete 36, 38 liegen sich in axialer Richtung gegenüber.

Die Magnetkupplung 28 weist einen ersten Rotor 32 und einen zweiten Rotor 34 auf. Der erste Rotor 32 ist drehfest mit einer Ausgangswelle der Expansionsmaschine 24 verbunden. Der zweite Rotor 34 ist drehfest mit dem Rädertrieb 30 verbunden. Der erste Rotor 32 weist mehrere Magnete 36 auf. Die mehreren Magnete 36 sind mit alternierender Polarität entlang einer Umfangsrichtung um eine Drehachse des ersten Rotors 32 angeordnet. Ebenso weist der zweite Rotor 34 mehrere Magnete 38 auf, die mit alternierender Polarität entlang einer Umfangsrichtung um eine Drehachse des zweiten Rotors 34 angeordnet sind. Der erste Rotor 32 und der zweite Rotor 34 sind koaxial angeordnet. Die Magnete 36, 38 liegen einander gegenüber, berühren sich aber nicht. Die Magnete 36, 38 können miteinander wechselwirken, sodass sie sich je nach Polarität des gerade gegenüberliegenden Magneten anziehen oder abstoßen können.

Bei der als Radialmagnetkupplung ausgebildeten Magnetkupplung 28 von Figur 2 ist der erste Rotor 32 als Außenrotor und der zweite Rotor 34 als Innenrotor, der innerhalb des Außenrotors rotiert, ausgebildet. Bei der als Axialmagnetkupplung ausgebildeten Magnetkupplung 28 von Figur 3 liegen sich die Rotoren 32, 34 axial gegenüber.

Der erste Rotor 32 und der zweite Rotor 34 sind frei drehbar zueinander. D. h., es sind insbesondere keine Anschläge vorgesehen, die einen Verdrehwinkel Δφ zwischen dem ersten Rotor 32 und dem zweiten Rotor 34 begrenzen.

Über die Magnete 36, 38 können die Rotoren 32, 34 miteinander gekoppelt werden, sodass eine Drehung und ein Drehmoment von einem Rotor auf den anderen Rotor übertragbar ist. Bei Drehungleichförmigkeiten können sich die Magnete 36, 38 und damit die Rotoren 32, 34 geringfügig relativ zueinander bewegen, um beispielsweise Drehschwingungen zu kompensieren. Dieser Betriebsmodus wird hierin auch als drehschwingungsdämpfender Drehmomentübertragungsbetrieb bezeichnet. In diesem Betriebsmodus wird ein Drehmoment im Wesentlichen vollständig zwischen den Rotoren 32 und 34 übertragen und die Rotoren 32 und 34 drehen sich im Wesentlichen mit gleicher Drehzahl.

Aufgrund der freien Drehbarkeit der Rotoren 32 und 34 zueinander besteht jedoch auch die Möglichkeit, einen Freilaufbetrieb zwischen den Rotoren 32 und 34 zu realisieren. Im Freilaufbetrieb rotieren die Rotoren 32 und 34 relativ zueinander. Zusätzlich kann aufgrund der miteinander wechselwirkenden Magnete 36, 38 ein geringes Schleppmoment zwischen den Rotoren 32, 34 bestehen. Dieses Schleppmoment kann beispielsweise in einem Bereich kleiner als 10 % des maximal dynamischen Betriebsmoments sein.

Insbesondere geht ein Betrieb der Magnetkupplung 28 von dem drehschwingungsdämpfenden Drehmomentübertragungsbetrieb zu dem Freilaufbetrieb über, wenn ein zwischen den Rotoren 32 und 34 zu übertragenes Drehmoment betragsmäßig größer als ein vorbestimmtes Grenzdrehmoment ist. Das Grenzdrehmoment wird durch die Ausbildung der Magnete 36, 38 passiv vorgegeben. Insbesondere wird das Grenzdrehmoment über eine Dimensionierung, eine Anzahl, einen Werkstoff und/oder eine Anordnung der mehreren Magnete 36, 38 vorbestimmt.

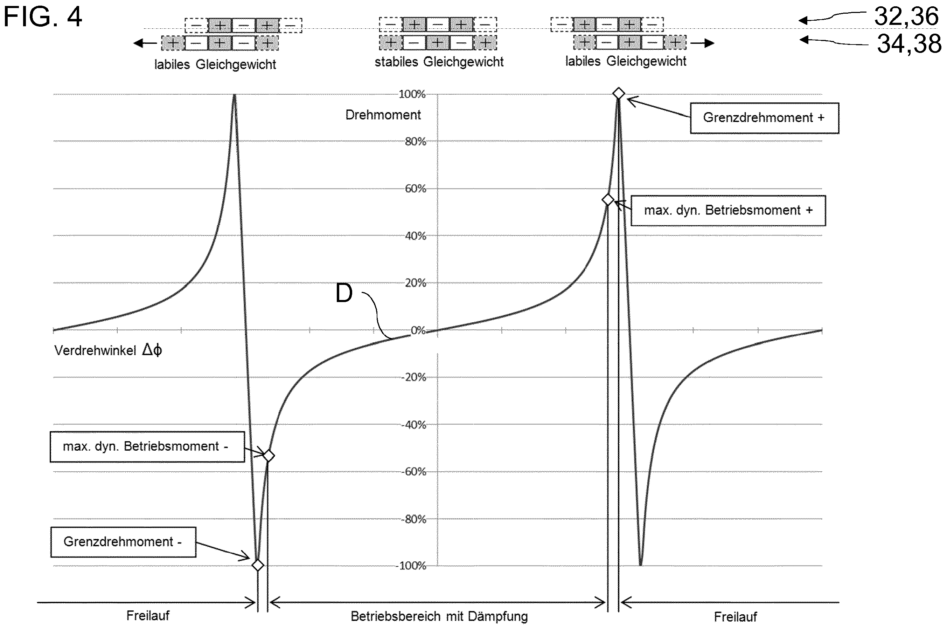

Nachfolgend ist unter Bezugnahme auf Figur 4 beschrieben, auf welchen Wert das Grenzdrehmoment eingestellt werden und wie ein Drehmomentverlauf D der Magnetkupplung 28 ausgebildet sein kann. In der Figur 4 ist der Drehmomentverlauf D der Magnetkupplung über den Verdrehwinkel Δφ zwischen dem ersten Rotor 32 und dem zweiten Rotor 34 aufgetragen.

Hierbei spielen drei Drehmomente eine wesentliche Rolle: das maximal dynamische Betriebsmoment, das zulässige Überlastmoment der Expansionsmaschine und das Grenzdrehmoment der Magnetkupplung.

Wie hierin verwendet ist das maximale dynamische Betriebsmoment das Drehmoment, das im Volllastbetrieb der Expansionsmaschine maximal auftreten kann. Es beinhaltet das abgegebene maximale Drehmoment bei maximalem Dampfdruck der Expansionsmaschine 24 und die auftretenden Massenmomente infolge Dynamik (z. B. Kurbelwellenbeschleunigungen aufgrund von Zündstößen).

Wie hierin verwendet ist das zulässige Überlastmoment ein Merkmal der jeweiligen Expansionsmaschine. Es beziffert das Drehmoment, das an der Abtriebswelle der Expansionsmaschine wiederholt anliegen kann, ohne dass die Expansionsmaschine mechanisch beschädigt wird. Für eine als Axialkolbenmaschine ausgebildete Expansionsmaschine ist das beispielsweise das anliegende Drehmoment, das bei völlig mit flüssigem Arbeitsmedium gefüllten Zylindern keine Beschädigung von Kolben, Kolbenringen, Zylinderkopf, usw. verursacht ("Wasserschlag"). Naheliegend muss die Expansionsmaschine so dimensioniert sein, dass das zulässige Überlastmoment größer als das maximale dynamische Betriebsmoment ist.

Das maximale dynamische Betriebsmoment ist in Figur 4 beispielhaft bei rund + 55 % Drehmoment eingezeichnet. Das Grenzdrehmoment der Magnetkupplung 28 ist bei 100 % eingezeichnet. Bei Überschreiten des Grenzdrehmoments dreht die Magnetkupplung 28 durch. Das Grenzdrehmoment liegt betragsmäßig zwischen dem maximalen dynamischen Betriebsmoment und dem zulässigen Überlastmoment der Expansionsmaschine 24. Aufgrund der symmetrischen Ausführung der Magnetkupplung 28, die sich in beiden Drehrichtungen gleich verhält, ergibt sich somit auch ein (negatives) maximales dynamisches Betriebsmoment bei rund - 55 % Drehmoment und ein (positives) Grenzdrehmoment der Magnetkupplung 28 bei + 100 % Drehmoment.

Im Einzelnen erkennt man in Figur 4, dass bei 0 % Drehmoment (0 % des Überlastmoments) im Betriebsbereich mit Dämpfung ein stabiles Gleichgewicht zwischen den Magneten 36 des ersten Rotors 32 und den Magneten 38 des zweiten Rotors 34 besteht. Hierbei liegen sich Magnete mit unterschiedlicher Polarität direkt gegenüber. Wird beispielsweise ein Drehmoment an den ersten Rotor 32 zur Übertragung auf den zweiten Rotor 34 angelegt, so wandert man entsprechend der Höhe des Drehmoments auf der Kurve D nach rechts. Der Verdrehwinkel Δφ erhöht sich betragsmäßig. Wird hingegen ein Drehmoment an dem zweiten Rotor 34 zur Übertragung an den ersten Rotor 32 angelegt, so wandert man entsprechend der Höhe des Drehmoments auf der Kurve D nach links. Der Verdrehwinkel Δφ erhöht sich ebenfalls betragsmäßig. Im Normalbetrieb, in dem der erste Rotor 32 von der Expansionsmaschine 24 angetrieben wird, wird sich beispielsweise ein Betriebspunkt einstellen, der zum Beispiel um 20 % oder 30 % des Drehmoments zum Ausgleich von Drehschwingungen schwankt.

Bei Erreichen des Grenzdrehmoments der Magnetkupplung 28 liegt zwischen den Magneten 36, 38 ein labiles Gleichgewicht vor. Hierbei liegen sich Magnete mit gleicher Polarität direkt gegenüber. Wird das Drehmoment weiter erhöht, so springen die Magnete 36, 38 relativ zueinander aufgrund der Abstoßung weiter. Die Kopplung zwischen den Magneten 36 und 38 geht hierbei verloren (bzw. wird deutlich verringert) und die Rotoren 32, 34 beginnen, relativ zueinander im Freilaufbetrieb zu rotieren. Dabei sinkt das übertragbare Drehmoment stark auf ein geringes Schleppmoment ab. Aufgrund der Wechselwirkung der Magnete 36, 38 kann jedoch auch im Freilaufbetrieb dieses geringe Schleppmoment, zum Beispiel in einem Bereich kleiner als 10 % Drehmoment, zwischen den Rotoren 32, 34 übertragen werden.

Die genaue Funktionsweise der Magnetkupplung 28 kann anhand der nachfolgend beschriebenen Betriebsarten Kaltstartentkopplung, Freilaufbetrieb, Synchronisierung, Normalbetrieb, Überlastentkopplung unter Bezugnahme auf die Figuren 1 bis 4 näher erläutert werden.

Bei der Kaltstartentkopplung ist beim Start der Brennkraftmaschine 12 mit kalter Abwärmenutzungseinrichtung 14 die Expansionsmaschine 24 mit flüssigem Arbeitsmedium gefüllt. Über die Magnetkupplung 28 versucht die Brennkraftmaschine 12 die Expansionsmaschine 24 zu schleppen (drehschwingungsdämpfender Drehmomentübertragungsbetrieb). Dabei kann es beim Mitschleppen, insbesondere bei Expansionsmaschinen 24 mit Kompressionsphasen (z. B. Kolbenexpansionsmaschinen), zu einer Überschreitung des Grenzdrehmoments der Magnetkupplung 28 kommen. Dann geht die Magnetkupplung 28 in den Freilaufbetrieb, ohne die Expansionsmaschine 24 zu beschädigen.

Im Freilaufbetrieb drehen sich die Rotoren 32, 34 relativ zueinander mit einem geringen Schleppmoment. Dies gewährleistet, dass die Brennkraftmaschine 12 nur wenig Energie zum Schleppen der Expansionsmaschine 24 aufwenden muss. Die Expansionsmaschine 24 wird durch das versuchte Mitdrehen nicht beschädigt. In diesem Betrieb liegt an der Expansionsmaschine 24 ein geringes Drehmoment an, das vor allem bei nicht selbstanlautenden Expansionsmaschinen 24 einen sicheren Start ermöglicht. Die im Freilaufbetrieb entstehende Wärme wird durch die Kühlvorrichtung 31 ausreichend abgeführt, sodass es zu keiner thermischen Beschädigung der Magnetkupplung 28 kommt. Ein großer Vorteil gegenüber herkömmlichen Lösungen mit Klemmkörperfreiläufen ist die Verschleißfreiheit dieses Freilaufbetriebs.

Um aus dem Freilaufbetrieb in den Normalbetrieb zu gelangen, findet eine Synchronisierung statt. Die Magnetkupplung 28 befindet sich so lange im Freilaufbetrieb bis die Expansionsmaschine 24 ihre Betriebstemperatur erreicht und mit Heißdampf der Abwärmenutzungseinrichtung 14 beaufschlagt wird. Selbstanlaufende Expansionsmaschinen 24 drehen dabei selbständig hoch. Nicht-selbstanlaufende Expansionsmaschinen 24 müssen angedreht werden, was beispielsweise durch das oben beschriebene geringe Schleppmoment im Freilaufbetrieb erreicht wird. Wenn die Expansionsmaschine 24 hochdreht, erreicht sie bei ausreichender Leistungsabgabe die Synchrondrehzahl. Das ist die Drehzahl, bei der es zwischen den Rotoren 32, 34 keine Relativbewegung mehr gibt. In diesem Zeitpunkt koppeln sich die Magnete 36, 38 und die Magnetkupplung 28 geht in den drehschwingungsdämpfenden Drehmomentübertragungsbetrieb über. Dieser Einkoppelvorgang geschieht im Gegensatz zu beispielsweiser Lamellenkupplungen völlig verschleißfrei.

Im Normalbetrieb treibt die Expansionsmaschine 24 Leistung in die Brennkraftmaschine 12 ein. Das zwischen der Expansionsmaschine 24 und der Brennkraftmaschine 12 wirkende Drehmoment bewegt sich zwischen positiven und negativen maximalem dynamischen Betriebsmoment (Figur 4), insbesondere zwischen 0 % Drehmoment und positiven maximalem dynamischen Betriebsmoment. Gleichzeitig wirkt die Magnetkupplung 28 in diesem Zustand als verschleißfreier Drehschwingungsdämpfer und dämpft die Drehungleichförmigkeiten, die von der Brennkraftmaschine 12 auf die Expansionsmaschine 24 einwirken. Damit werden die mechanischen Belastungen auf die Bauteile der Expansionsmaschine 24 reduziert, um ein robustes System mit hohen Lebensdauern realisieren zu können.

Die Überlastentkoppelung ist wichtig, um im Falle einer defekten Expansionsmaschine 24 die Brennkraftmaschine 12 weiter betreiben zu können. Analog der Kaltstartentkoppelung kann im Normalbetrieb, beispielsweise durch einen Lagerschaden, das Grenzdrehmoment der Magnetkupplung 28 überschritten werden. Insbesondere kann das negative Grenzdrehmoment der Magnetkupplung 28 betragsmäßig überschritten werden. Die Magnetkupplung 28 geht dann in den Freilaufbetrieb und die Brennkraftmaschine 12 kann ohne die Expansionsmaschine 24 weiterbetrieben werden.

Damit ermöglicht die hierin beschriebene Magnetkupplung 28 eine passive, multifunktionale aber gleichzeitig kostengünstige, robuste und verschleißfreie Koppelung einer Expansionsmaschine 24 mit einer Brennkraftmaschine 12.

Wie oben stehend beschrieben ist, wird auch im Freilaufbetrieb ein geringes Schleppmoment zwischen den Rotoren 32, 34 übertragen. Hierbei können sich die Rotoren 32, 34 erwärmen, sodass es notwendig sein kann, die Kühlvorrichtung 31 (siehe Figur 1) vorzusehen. Die im Freilaufbetrieb entstehende Wärme kann durch ein Schmiermittel, wie beispielsweise Öl, und/oder ein Kühlmittel der Kühlvorrichtung 31 abgeführt werden, sodass es zu keiner thermischen Beschädigung der Magnetkupplung kommt.

Die Erfindung ist nicht auf die vorstehend beschriebenen bevorzugten Ausführungsbeispiele beschränkt. Insbesondere sind die Merkmale des unabhängigen Anspruchs 1 unabhängig voneinander offenbart. Zusätzlich sind auch die Merkmale der Unteransprüche unabhängig von sämtlichen Merkmalen des unabhängigen Anspruchs 1 und beispielsweise unabhängig von den Merkmalen bezüglich des Vorhandenseins und/oder der Konfiguration des ersten Rotors, des zweiten Rotors, der mehreren Magnete des ersten Rotors und/der der mehreren Magnete des zweiten Rotors des unabhängigen Anspruchs 1 offenbart.

### Bezugszeichenliste

- 10: Vorrichtung
- 12: Brennkraftmaschine
- 14: Abwärmenutzungseinrichtung
- 16: Kurbelwelle
- 18: Abgassystem
- 20: Speisepumpe
- 22: Verdampfer
- 24: Expansionsmaschine
- 26: Verflüssiger
- 28: Magnetkupplung
- 30: Rädertrieb
- 31: Kühlvorrichtung
- 32: Erster Rotor
- 34: Zweiter Rotor
- 36: Magnete
- 38: Magnete

- D: Drehmomentverlauf

## Patentansprüche

1. Vorrichtung, aufweisend:
a) eine Brennkraftmaschine (12);
b) eine Abwärmenutzungseinrichtung (14) aufweisend eine Magnetkupplung (28) und eine Expansionsmaschine (24), die trieblich mit der Magnetkupplung (28) verbunden ist, wobei die Brennkraftmaschine (12) über die Magnetkupplung (28) trieblich mit der Expansionsmaschine (24) der Abwärmenutzungseinrichtung (14) verbunden ist, und wobei die Magnetkupplung (28) eine Radialmagnetkupplung oder eine Axialmagnetkupplung ist und aufweist:
b1) einen ersten Rotor (32) mit mehreren mit alternierender magnetischer Polarität angeordneten Magneten (36); und
b2) einen zweiten Rotor (34) mit mehreren mit alternierender magnetischer Polarität angeordneten Magneten (38), die den mehreren Magneten (36) des ersten Rotors (32) zum magnetischen Koppeln des zweiten Rotors (34) mit dem ersten Rotor (32) gegenüberliegen, wobei:
b3) der erste Rotor (32) und der zweite Rotor (34) frei drehbar zueinander sind;
b4) die mehreren Magnete (36) des ersten Rotors (32) und die mehreren Magnete (38) des zweiten Rotors (34) so ausgebildet sind, dass ein drehschwingungsdämpfender Drehmomentübertragungsbetrieb zwischen dem ersten Rotor (32) und dem zweiten Rotor (34) in einen Freilaufbetrieb zwischen dem ersten Rotor (32) und dem zweiten Rotor (34) übergeht, wenn ein zwischen dem ersten Rotor (32) und dem zweiten Rotor (34) zu übertragendes Drehmoment betragsmäßig größer als ein vorbestimmtes Grenzdrehmoment ist;
b5) das Grenzdrehmoment in einem Bereich größer als ein Betrag eines maximalen dynamischen Betriebsmoments der Expansionsmaschine (24) und kleiner oder gleich einem Betrag eines zulässigen Überlastmoments der Expansionsmaschine (24) liegt oder das Grenzdrehmoment betragsmäßig einem zulässigen Überlastmoment der Expansionsmaschine (24) entspricht;
b6) sich beim Freilaufbetrieb der erste Rotor (32) und der zweite Rotor (34) relativ zueinander mit einem Schleppmoment drehen, wobei das Schleppmoment ermöglicht, dass die Brennkraftmaschine (12) die Expansionsmaschine (24) zu Beginn des Hochfahrens im Freilaufbetrieb mitschleppt;
b7) beim Erreichen eines Normalbetriebsbereichs der Expansionsmaschine (24) eine Synchrondrehzahl zwischen dem ersten Rotor (32) und dem zweiten Rotor (34) erreicht wird, bei der die Magnetkupplung (28) vom Freilaufbetrieb in den drehschwingungsdämpfenden Drehmomentübertragungsbetrieb übergeht und/oder im Normalbetriebsbereich der Expansionsmaschine (24) die Magnetkupplung (28) im drehschwingungsdämpfenden Drehmomentübertragungsbetrieb ist; und
b8) im Überlastbetriebsbereich der Expansionsmaschine (24) die Magnetkupplung (28) aufgrund des Überschreitens des Grenzdrehmoments in den Freilaufbetrieb übergeht.

2. Vorrichtung nach Anspruch 1, wobei:
beim drehschwingungsdämpfenden
Drehmomentübertragungsbetrieb ein an dem ersten Rotor (32) anliegendes Drehmoment im Wesentlich vollständig an den zweiten Rotor (34) übertragen wird und umgekehrt.

3. Vorrichtung nach Anspruch 1 oder Anspruch 2, wobei:
der erste Rotor (32) und der zweite Rotor (34) zum Zeitpunkt des Überschreitens des Grenzdrehmoments so zueinander verdreht sind, dass sich jeweils Magnete des ersten Rotors (32) und des zweiten Rotors (34) mit gleicher magnetischer Polarität direkt gegenüberliegen.

4. Vorrichtung nach einem der vorherigen Ansprüche, wobei:
der Freilaufbetrieb in den drehschwingungsdämpfenden Drehmomentübertragungsbetrieb übergeht, wenn ein zwischen dem ersten Rotor (32) und dem zweiten Rotor (34) zu übertragendes Drehmoment betragsmäßig kleiner als das Grenzdrehmoment ist und sich der erste Rotor (32) und der zweite Rotor (34) synchron drehen.

5. Vorrichtung nach einem der vorherigen Ansprüche, wobei:
das Grenzdrehmoment passiv über eine Dimensionierung,
eine Anzahl, einen Werkstoff und/oder eine Anordnung der mehreren Magnete (36) des ersten Rotors (32) und der mehreren Magnete (38) des zweiten Rotors (34) vorgegeben ist.

6. Vorrichtung nach einem der vorherigen Ansprüche, ferner aufweisend: eine Kühlvorrichtung (31), die zum Kühlen des ersten Rotors (32) und/oder des zweiten Rotors (34) ausgebildet ist.

7. Vorrichtung nach einem der vorherigen Ansprüche, wobei: die Magnetkupplung (28) keine Mittel, insbesondere Anschläge, zum Begrenzen eines relativen Verdrehwinkels zwischen dem ersten Rotor (32) und dem zweiten Rotor (34) aufweist.

8. Vorrichtung nach einem der vorherigen Ansprüche, wobei beim Starten der Brennkraftmaschine (12) die Expansionsmaschine (24) über die Magnetkupplung (28) im drehschwingungsdämpfenden Drehmomentübertragungsbetrieb mitgeschleppt wird, wobei bei Überschreiten des Grenzdrehmoments die Magnetkupplung (28) in den Freilaufbetrieb übergeht.

9. Kraftfahrzeug, insbesondere Nutzfahrzeug, aufweisend: eine Vorrichtung nach einem der vorherigen Ansprüche.

## Claims

1. An apparatus having:
a) an internal combustion engine (12);
b) a waste heat utilization device (14) having a magnetic coupling (28) and an expansion machine (24) which is connected in terms of drive to the magnetic coupling (28), wherein the internal combustion engine (12) is connected in terms of drive to the expansion machine (24) of the waste heat utilization device (14) via the magnetic coupling (28), and wherein the magnetic coupling (28) is a radial magnetic coupling or an axial magnetic coupling and has:
b1) a first rotor (32) with multiple magnets (36) arranged with alternating magnetic polarity; and
b2) a second rotor (34) with multiple magnets (38) which are arranged with alternating magnetic polarity and which are situated opposite the multiple magnets (36) of the first rotor (32) for the purposes of magnetically coupling the second rotor (34) to the first rotor (32),
wherein:
b3) the first rotor (32) and the second rotor (34) are freely rotatable relative to one another;
b4) the multiple magnets (36) of the first rotor (32) and the multiple magnets (38) of the second rotor (34) are configured such that a rotary-vibration-damping torque-transmitting operating mode between the first rotor (32) and the second rotor (34) changes to a freewheeling operating mode between the first rotor (32) and the second rotor (34) if a torque to be transmitted between the first rotor (32) and the second rotor (34) is higher in terms of magnitude than a predetermined threshold torque;
b5) the threshold torque lies in a range higher than a magnitude of a maximum dynamic operating torque of the expansion machine (24) and lower than or equal to a magnitude of an admissible overload torque of the expansion machine (24), or the threshold torque corresponds in terms of magnitude to an admissible overload torque of the expansion machine (24);
b6) during the freewheeling operating mode, the first rotor (32) and the second rotor (34) rotate relative to one another with a drag torque, wherein the drag torque makes it possible for the internal combustion engine (12) to concomitantly rotate the expansion machine (24) upon commencement of start-up in the freewheeling operating mode;
b7) when a normal operating range of the expansion machine (24) is reached, a synchronous rotational speed between the first rotor (32) and the second rotor (34) is reached at which the magnetic coupling (28) changes from the freewheeling operating mode to the rotary-vibration-damping torque-transmitting operating mode, and/or, in the normal operating range of the expansion machine (24), the magnetic coupling (28) is in the rotary-vibration-damping torque-transmitting operating mode; and
b8) in the overload operating range of the expansion machine (24), the magnetic coupling (28) changes to the freewheeling operating mode owing to the overshooting of the threshold torque.

2. The apparatus according to Claim 1, wherein:
in the rotary-vibration-damping torque-transmitting operating mode, a torque prevailing at the first rotor (32) is transmitted substantially entirely to the second rotor (34), and vice versa.

3. The apparatus according to Claim 1 or Claim 2, wherein:
at the time of the overshooting of the threshold torque, the first rotor (32) and the second rotor (34) are rotationally offset with respect to one another such that magnets of the first rotor (32) and of the second rotor (34) with the same magnetic polarity are in each case situated directly opposite one another.

4. The apparatus according to any one of the preceding claims, wherein:
the freewheeling operating mode changes to the rotary-vibration-damping torque-transmitting operating mode if a torque to be transmitted between the first rotor (32) and the second rotor (34) is lower in terms of magnitude than the threshold torque, and the first rotor (32) and the second rotor (34) are rotating synchronously.

5. The apparatus according to any one of the preceding claims, wherein:
the threshold torque is specified passively by way of a dimensioning, a number, a material and/or an arrangement of the multiple magnets (36) of the first rotor (32) and of the multiple magnets (38) of the second rotor (34).

6. The apparatus according to any one of the preceding claims, furthermore having:
a cooling apparatus (31) which is configured for cooling the first rotor (32) and/or the second rotor (34) .

7. The apparatus according to any one of the preceding claims, wherein:
the magnetic coupling (28) has no means, in particular stops, for limiting a relative rotational angle between the first rotor (32) and the second rotor (34).

8. The apparatus according to any one of the preceding claims, wherein,
upon the starting of the internal combustion engine (12), the expansion machine (24) is concomitantly rotated via the magnetic coupling (28) in the rotary-vibration-damping torque-transmitting operating mode, wherein the magnetic coupling (28) changes to the freewheeling operating mode in the event of overshooting of the threshold torque.

9. A motor vehicle, in particular utility vehicle, having:
an apparatus according to any one of the preceding claims.

## Revendications

1. Dispositif, comprenant :
a) un moteur à combustion interne (12) ;
b) un appareil d'utilisation de chaleur perdue (14) comprenant un accouplement magnétique (28) et un moteur d'expansion (24), qui est relié en transmission à l'accouplement magnétique (28), le moteur à combustion interne (12) étant relié en transmission au moteur d'expansion (24) de l'appareil d'utilisation de chaleur perdue (14) par l'intermédiaire de l'accouplement magnétique (28), et l'accouplement magnétique (28) étant un accouplement magnétique radial ou un accouplement magnétique axial et comprenant :
b1) un premier rotor (32) comprenant une pluralité d'aimants (36) agencés avec une polarité magnétique alternée ; et
b2) un deuxième rotor (34) comprenant une pluralité d'aimants (38) agencés avec une polarité magnétique alternée, qui font face à la pluralité d'aimants (36) du premier rotor (32) pour l'accouplement magnétique du deuxième rotor (34) au premier rotor (32),
b3) le premier rotor (32) et le deuxième rotor (34) étant librement rotatifs l'un par rapport à l'autre ;
b4) la pluralité d'aimants (36) du premier rotor (32) et la pluralité d'aimants (38) du deuxième rotor (34) étant configurés de telle sorte qu'un mode d'exploitation de transmission de couple de rotation avec amortissement des vibrations de rotation entre le premier rotor (32) et le deuxième rotor (34) passe à un mode d'exploitation en roue libre entre le premier rotor (32) et le deuxième rotor (34) lorsqu'un couple de rotation à transmettre entre le premier rotor (32) et le deuxième rotor (34) est supérieur en valeur absolue à un couple de rotation limite prédéterminé ;
b5) le couple de rotation limite se situant dans une plage supérieure à une valeur absolue d'un couple d'exploitation dynamique maximal du moteur d'expansion (24) et inférieure ou égale à une valeur absolue d'un couple de surcharge autorisé du moteur d'expansion (24) ou le couple de rotation limite correspondant en valeur absolue à un couple de surcharge autorisé du moteur d'expansion (24) ;
b6) en mode d'exploitation en roue libre, le premier rotor (32) et le deuxième rotor (34) tournant l'un par rapport à l'autre avec un couple de glissement, le couple de glissement permettant au moteur à combustion interne (12) d'entraîner le moteur d'expansion (24) au début de la montée en régime en mode d'exploitation en roue libre ;
b7) lorsque le moteur d'expansion (24) atteint une plage d'exploitation normale, une vitesse de rotation synchrone étant atteinte entre le premier rotor (32) et le deuxième rotor (34), à laquelle l'accouplement magnétique (28) passe du mode d'exploitation en roue libre au mode d'exploitation de transmission de couple de rotation avec amortissement des vibrations de rotation et/ou, dans la plage d'exploitation normale du moteur d'expansion (24), l'accouplement magnétique (28) étant dans le mode d'exploitation de transmission de couple de rotation avec amortissement des vibrations de rotation ; et
b8) dans la plage d'exploitation de surcharge du moteur d'expansion (24), l'accouplement magnétique (28) passant en mode d'exploitation en roue libre en raison du dépassement du couple de rotation limite.

2. Dispositif selon la revendication 1, dans lequel :
dans le mode d'exploitation de transmission de couple de rotation avec amortissement des vibrations de rotation, un couple de rotation appliqué au premier rotor (32) est transmis essentiellement intégralement au deuxième rotor (34) et inversement.

3. Dispositif selon la revendication 1 ou la revendication 2, dans lequel :
le premier rotor (32) et le deuxième rotor (34) sont mis en rotation l'un par rapport à l'autre au moment du dépassement du couple de rotation limite de telle sorte que des aimants respectifs du premier rotor (32) et du deuxième rotor (34) ayant la même polarité magnétique se font directement face.

4. Dispositif selon l'une quelconque des revendications précédentes, dans lequel :
le mode d'exploitation en roue libre passe au mode d'exploitation de transmission de couple de rotation avec amortissement des vibrations de rotation lorsqu'un couple de rotation à transmettre entre le premier rotor (32) et le deuxième rotor (34) est inférieur en valeur absolue au couple de rotation limite et que le premier rotor (32) et le deuxième rotor (34) tournent de manière synchrone.

5. Dispositif selon l'une quelconque des revendications précédentes, dans lequel :
le couple de rotation limite est prédéterminé passivement par un dimensionnement, un nombre, un matériau et/ou un agencement de la pluralité d'aimants (36) du premier rotor (32) et de la pluralité d'aimants (38) du deuxième rotor (34).

6. Dispositif selon l'une quelconque des revendications précédentes, comprenant en outre :
un dispositif de refroidissement (31), qui est configuré pour le refroidissement du premier rotor (32) et/ou du deuxième rotor (34).

7. Dispositif selon l'une quelconque des revendications précédentes, dans lequel :
l'accouplement magnétique (28) ne comporte pas de moyens, notamment de butées, pour limiter un angle de rotation relatif entre le premier rotor (32) et le deuxième rotor (34).

8. Dispositif selon l'une quelconque des revendications précédentes, dans lequel
lors du démarrage du moteur à combustion interne (12), le moteur d'expansion (24) est entraîné par l'intermédiaire de l'accouplement magnétique (28) dans le mode d'exploitation de transmission de couple de rotation avec amortissement des vibrations de rotation, l'accouplement magnétique (28) passant en mode d'exploitation en roue libre lorsque le couple de rotation limite est dépassé.

9. Véhicule automobile, en particulier véhicule utilitaire, comportant :
un dispositif selon l'une des revendications précédentes.
